# EUROPEAN PATENT APPLICATION

(11) **EP 2 258 215 A1**
(43) Date of publication of application: **08.12.2010**
(21) Application number: 09014991.5
(22) Date of filing: 03.12.2009
(51) Int. Cl.: A23L 1/29, A23L 1/30, A23L 1/305, A23L 1/308, A23L 1/48, A23L 2/38, A23L 2/52, A23L 2/66, A23D 7/005, A23L 1/302, A23L 1/304

(54) **Composition for ketogenic diet and preparation method thereof**

(30) Priority: 04.06.2009 KR 20090049484; 19.10.2009 KR 20090099283
(71) Applicant: Namyang Dairy Products Co., Ltd., Jung-gu Seoul (KR); Kim, Dong Wook, Mok 5-dong Yangcheon-gu, Seoul (KR)
(72) Inventor: Kim, Dong Wook, Yangcheon-gu, Seoul (KR); Kim, Heung Dong, Jongno-gu, Seoul (KR); Jeong, Seung Hwan, Bundang-gu, Seongnam-si, Gyeonggi-do (KR); Jin, Hyun Seok, Asan-si, Chungcheongnam-do (KR); Park, Kyoung Ae, Seocho-gu, Seoul (KR); Lee, Sang Cheon, Yuseong-gu, Daejeon-si (KR); Lee, Ki Woong, Yuseong-gu, Daejeon-si (KR); Cho, Young Hoon, Seogu, Daejeon-si (KR); Lee, Eun Ju, Seo-gu, Daejeon-si (KR)
(74) Representative: Herrmann, Uwe

(57) **Abstract**

Provided are a composition for the ketogenic diet and a preparation method thereof, specifically a composition suitable for the ketogenic diet provided in a liquid form, which has the ketogenic ratio of 3-5:1, and a preparation method thereof. The composition for the ketogenic diet according to the preparation method of the present invention can be easily taken by patients since it does not cause rejections such as vomit or diarrhea which may occur with the start of the ketogenic diet, and eliminate the inconvenience of taking additional food for obtaining other functional elements required for the human body owing to functional substances included therein. Moreover, the homogenous liquid form of the present composition allows it to easily slide down the throat and provides good texture in the mouth, thereby it helps a patient to easily take the same.

## Description

### Technical Field of the invention

The present invention relates to a ketogenic diet composition and a preparation method thereof, specifically to a ketogenic diet composition provided in a liquid form, which has the ketogenic ratio of 3-5:1, and a preparation method thereof.

### Background of the invention

Epilepsy is a neurological disorder characterized by unprovoked recurrent disorders in mental functions, consciousness, the senses and physical functions caused by sudden dysfunction of cerebral neurons. Symptoms of epilepsy may include: grand mal seizures which cause systemic convulsions including shaking of the limbs, and a fall with a sudden loss of consciousness; petit mal seizures which cause only a momentary loss of consciousness; focal seizures which cause problems in physical or sensory functions in certain body parts; and other purposeless and unintended movement without recognition, illusion, hallucination or change in mood.

It is a chronic recurrent state of seizures occurred when cerebral neurons are at an excessively excited state, thus called as seizure disorder and a convulsive disorder as well.

Epilepsy is a quite common disease, and its prevalence rate is 0.5-1% of the whole population in the world. It is estimated that approximately 300,000-400,000 patients are currently present in Korea. Two thirds of epilepsy patients experienced the first fit before 20 years old, and in about half of them, it occurred before 4 years old.

For treating epilepsy, drug (anticonvulsant) therapy, surgery, vagnus nerve stimulation therapy, ketogenic diet therapy and the like have been currently developed.

Particularly, the ketogenic diet is a therapy which has a long history in treating epilepsy, developed and clinically used from the 1920s, not a novel therapy developed in recent years. It has long been known that fasting has an effect on controlling seizures. In 1921, Geyelin subjected his epilepsy patients to periodic fasting and found that seizures were reduced during fasting, thereby proving the antiepileptic effect of fasting. In the same year, Wilder created a high-fat low-carbohydrate diet therapy for epilepsy with a purpose to supply patients with proper calories and nutrition, while maintaining ketosis and the antiepileptic effect established by such fasting. It was the start of the ketogenic diet therapy.

The key principle of the ketogenic diet is that a 4:1 ratio by weight of fat to non-fats (carbohydrate and protein), i.e. the ketogenic ratio should be kept.

In the ketogenic diet, the total daily calories divided into each meal and rationed, and the ratio of fat to non-fats should be kept same in each meal. In order to take food according to the ratio, patients should take the whole meal provided each time without leftover. Such whole process of following the diet causes inconvenience to patients.

Moreover, serious rejections may occur in patients due to extremely restricted intake of carbohydrates, as well as adverse effects such as diarrhea or stomachache.

### Summary of the Invention

The present invention has been designed to solve the problems of prior arts. An object of the present invention is to provide a composition for the ketogenic diet which can be easily taken by patients since it does not cause rejections as compared to those for the conventional ketogenic diet, and supply nutrients required for the human body without additional intake of functional foods containing other functional elements, as well as a method for preparing the same.

### Brief description of the drawing

Fig.1 is a flow chart which schematically discloses the method for preparing a composition for the ketogenic diet according to the present invention.
Fig.2 is a plot illustrating the results showing the reduction in seizure frequency after the intake of the composition for the ketogenic diet prepared by the present invention.

### Disclosure of the invention

In order to achieve the above object, the composition for the ketogenic diet of the present invention characteristically comprises the following processes of:
a dissolving process wherein protein and carbohydrate materials and purified water are mixed and dissolved together in a first mixing tank(1st process);
a complex stabilizer mixing process wherein the raw material solution obtained from the 1st process is mixed with a complex stabilizer at the mixing ratio of 1:0.002-0.004 by weight of the raw material to the complex stabilizer(2nd process);
an emulsifying process wherein vegetable oil is mixed with an emulsifier and stirred for 20-40 minutes in a second mixing tank for emulsification(3rd process);
a mixing process wherein the raw material solution mixed with the complex stabilizer from the 2nd process is mixed with emulsified oil from the 3rd process(4th process);
a cooling and addition process wherein the raw material mixture obtained from the 4th process is cooled to 5-10°C and then functional materials are added thereto(5th process;
a preheating and degassing process wherein Ketonia obtained from the 5th process is preheated in a heater at 50-80°C and degassed in a degasser(6th process);
a homogenization process wherein Ketonia preheated and degassed in the 6th process is homogenized in a homogenizer(7th process); and
a sterilization and cooling process wherein Ketonia homogenized in the 7th process is sterilized in a sterilizer and cooled in a cooler(8th process).

In the 1st process, it is preferred to mix 95.4-97.2wt% of purified water, 1.47-2.52wt% of sodium caseinate, 0.98-1.42wt% of milk fat globule membrane protein, 0.07-0.18wt% of alpha lactalbumin and 0.28-0.48wt% of fructo-oligosaccharides in the first mixing tank.

In the 3rd process, it is preferred to mix vegetable oil with an emulsifier at the mixing ratio of 1:0.06-0.1 by weight of the vegetable oil to the emulsifier in the second mixing tank.

In the 4th process, it is preferred to mix the raw material solution mixed with a complex stabilizer from the 2nd process with the emulsified oil from the 3rd process at the ratio of 1:0.1-0.2 by weight of the solution to the emulsified oil in the third mixing tank.

In the 5th process, it is preferred to add functional materials to the cooled raw material mixture at the ratio of 1:0.01-0.3 by weight of the raw material mixture to the functional materials.

In the 5th process, the functional materials preferably comprise a mixture of 74.85-84.55wt% of minerals, 5.89-8.17wt% of vitamins, 0.02-0.2wt% of a sweetener and 9.54-16.78wt% of aromatics.

The homogenizer used in the 7th process is preferably operated under the pressure of 190-500 bars.

In order to achieve the object of the present invention, a composition suitable for the ketogenic diet of the present invention is characterized by being prepared according to the method of the present invention in a liquid form and has the ketogenic ratio of 3-5:1.

The composition for the ketogenic diet of the present invention is characterized by having the ketogenic ratio of 3-5:1 by weight of fat to non-fats (carbohydrates and proteins) and being provided in a liquid form. By preparing the composition to have the ketogenic ratio of 3-5:1, more preferably 3.5-4.5:1, most preferably 4:1, it can exhibit excellent effects on an antiepileptic diet. Further, it eliminates inconvenience of adding water for intake by being provided as a liquid formulation.

It is preferred to further incorporate functional materials into the composition, wherein the functional materials include a sweetener and aromatics as an additive for reducing rejections such as vomiting or diarrhea often occurred in the ketogenic diet, and a variety of vitamins and minerals as an additive for avoiding inconvenience of separately having additional food for taking other nutrients lacked in the ketogenic diet.

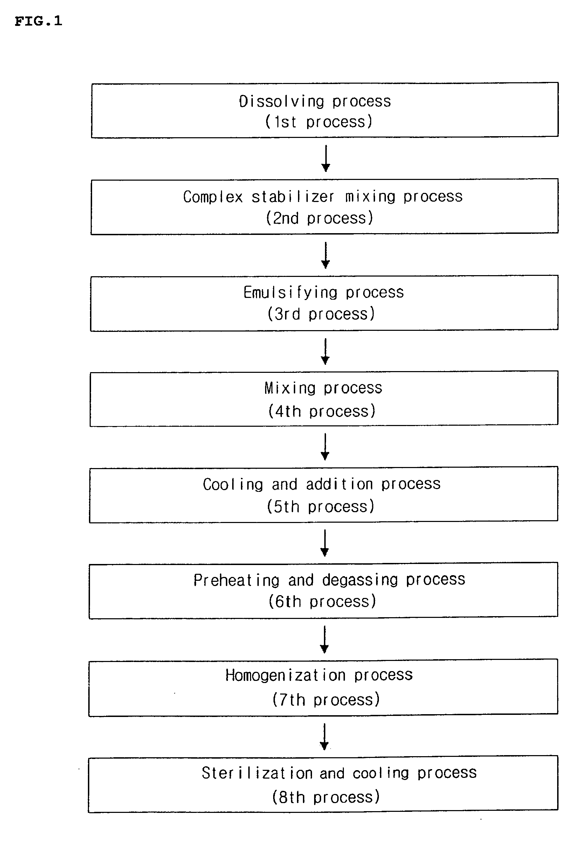

Hereinafter, the method for preparing a composition for the ketogenic diet according to the present invention is described in detail, by referencing Fig.1 attached to this specification.

### 1. Dissolving process (1st process)

This process is to dissolve raw materials in purified water, wherein purified water, protein and carbohydrate materials are mixed and dissolved together in a first mixing tank.

The purified water used herein is purified by sequentially passing through a sand filter, a cation exchange resin device, a microfilter and a reverse osmosis filter. The preferred temperature of the purified water is 55-80C.

The temperature range of 55-80°C is to make the water molecules vigorously move and thus to facilitate dissolution of the protein and carbohydrate materials.

The protein materials used herein are those generally used in the art, for example those separated and purified from milk or soybeans.

It is preferred to use any one selected from sodium caseinate, milk fat globule protein and alpha lactalbumin, which were separated and purified from milk, or a mixture of two or more of them.

The carbohydrate materials used herein are those generally used in the art, for example saccharides such as fructose or glucose, or oligosaccharides.

It is preferred to use either crystalline fructose or fructo-oligosaccharides, or a mixture of two or more of them.

Most preferably, purified water, sodium caseinate, milk fat globule protein, alpha lactalbumin and fructo-oligosaccharides are mixed together in the first mixing tank.

Specifically, it is preferred that 95.4-97.2wt% of purified water, 1.47-2.52wt% of sodium caseinate, 0.98-1.42wt% of milk fat globule protein, 0.07-0.18wt% of alpha lactalbumin and 0.28-0.48wt% of fructo-oligosaccharides are mixed in the first mixing tank.

Herein, the mixture obtained from the first mixing tank is referred as a raw material solution.

### 2. Complex stabilizer mixing process (2nd process)

This process is to mix a complex stabilizer with the raw material solution, wherein the complex stabilizer is added at the mixing ratio of 1:0.002-0.004 by weight of the raw material solution to the complex stabilizer.

Particularly, the complex stabilizer used in the process is those generally used in the art, and the species thereof are not specifically limited.

It is preferred to use one selected from glycerin esters of fatty acids, carrageenan and guar gum, or a mixture thereof.

### 3. Emulsifying process (3rd process)

This process is to mix vegetable oil with an emulsifier for emulsification, wherein vegetable oil is mixed with an emulsifier in a second mixing tank, and then stirred for 20-40 minutes so as to be emulsified.

In this process, it is preferred that vegetable oil is mixed with an emulsifier at the mixing ratio of 1:0.06-0.1 by weight of the vegetable oil to the emulsifier in the second mixing tank.

Vegetable oil used in this process is those generally used in the art, which are collected and refined from plants.

It is preferred to use one selected from olive oil, soybean oil, corn oil, cottonseed oil, safflower oil, sunflower seed oil, palm oil, coconut oil, grape seed oil and canola oil, or a mixture of two or more of them.

It is more preferred to use a mixture of 84.25-90.65wt% of olive oil and 9.35-15.75wt% of soybean oil.

The preferred temperature of vegetable oil used in this process is in the range of 50-80°C.

The temperature range of 50-80°C of vegetable oil is to help the vegetable oil molecules to vigorously move, thus to facilitate a reaction with the emulsifier being mixed therewith, thereby finally promoting emulsification of vegetable oil.

The emulsifier used in this process is those generally used in the art, and preferably used is any one of glycerin esters of fatty acids, modified starch and dextrin or mixtures thereof.

More preferably, a mixture of 30.55-38.55wt% of glycerin esters of fatty acids and 61.45-69.45wt% of modified starch is used.

Herein, the mixture of vegetable oil and the emulsifier in the second mixing tank is referred as an emulsified oil.

### 4. Mixing process (4th process)

This process is to mix the raw material solution mixed with the complex stabilizer from the 2nd process is mixed with the emulsified oil from the 3rd process in the third mixing tank.

In this process, it is preferred that the mixing ratio of the raw material solution mixed with the complex stabilizer to the emulsified oil is 1:0.1-0.2 by weight, in the third mixing tank. By virtue of the mixing ratio, it is possible to provide a composition for the ketogenic diet according to the present invention with the ketogenic ratio of 3-5:1, particularly 4:1 by weight of fat to non-fats (carbohydrate and protein).

Herein, the mixture of the raw material solution mixed with the complex stabilizer and the emulsified oil in the third mixing tank is referred as a raw material mixture.

### 5. Cooling and addition process (5th process)

This process is to cool down the raw material mixture and then add functional materials thereto, wherein the raw material mixture from the 4th process is cooled to 5-10°C and functional materials are added thereto.

The reason for cooling down the raw material mixture to 5-10°C first and then adding functional materials thereto is to prevent the functional materials from being destroyed by the high temperature of the raw material mixture as much as possible.

It is preferred that the functional materials are added to the cooled raw material mixture at the ratio of 1:0.01-0.3 by weight of the raw material mixture to the functional materials.

The reason for adding the functional materials to the cooled raw material mixture at the ratio of 1:0.01-0.3 by weight is to help a patient to take functional elements required for the human body without taking additional foods containing functional materials as well as to easily take the present composition without rejection.

Functional materials which can be added in this process include a mixture of minerals, vitamins, a sweetener and aromatics.

Specifically, it is preferred that the functional materials comprise a mixture of 74.85-84.55wt% of minerals, 5.89-8.17wt% of vitamins, 0.02-0.2wt% of a sweetener and 9.54-16.78wt% of aromatics.

Particularly, as for the minerals, it is preferred to use one or more selected from tricalcium phosphate, monocalcium phosphate, calcium carbonate, potassium citrate, potassium chloride, sodium bicarbonate, magnesium hydroxide, manganese sulfate, ferrous lactate, cupric sulfate, zinc sulfate, potassium iodide, choline chloride and purified salt.

It is more preferred to use a mixture of about 27.52wt% of tricalcium phosphate, about 11.47wt% of monocalcium phosphate, about 8.03wt% of calcium carbonate, about 20.64wt% of potassium citrate, about 12.61wt% of potassium chloride, about 7.45wt% of sodium bicarbonate, about 2.64wt% of magnesium hydroxide, about 0.06wt% of manganese sulfate, about 1.49wt% of ferrous lactate, about 0.06wt% of cupric sulfate, about 0.92wt% of zinc sulfate, about 0.06wt% of potassium iodide, about 1.72wt% of choline chloride and about 5.33wt% of purified salt.

Particularly, as for the vitamins, it is preferred to use one or more selected from vitamin A, vitamin D3, vitamin E, vitamin K1, vitamin B1, vitamin B2, vitamin B6, vitamin B12, vitamin C, niacin (vitamin B3), pantothenic acid(vitamin B5), biotin(vitamin B7), folic acid(vitamin B9), inositol(vitamin B8), taurine and L-carnitine(vitamin Bt).

It is more preferred to use a mixture of about 1.61wt% of vitamin A, about 1.28wt% of vitamin D3, about 2.35wt% of vitamin E, about 0.67wt% of vitamin K1, about 0.67wt% of vitamin B1, about 0.40wt% of vitamin B2, about 0.67wt% of vitamin B6, about 0.67wt% of vitamin B12, about 34.79wt% of vitamin C, about 2.89wt% of niacin(vitamin B3), about 0.87wt% of pantothenic acid(vitamin B5), about 0.67wt% of biotin(vitamin B7), about 0.67wt% of folic acid(vitamin B9), about 8.06wt% of inositol(vitamin B8), about 36.94wt% of taurine and about 6.78wt% of L-carnitine(vitamin Bt).

Particularly, the sweetener is those commonly used in the art, without being restricted by its types. Preferably, sucralose is used.

Particularly, the aromatic is those commonly used in the art, without being restricted by its types. Preferably, a banana-flavor aromatic is used.

Herein, the product obtained by cooling the raw material mixture from the 4th process and adding functional materials including a mixture of minerals, vitamins and aromatics thereto is referred as Ketonia.

### 6. Preheating and degassing process (6th process)

This process is to preheat and degas Ketonia, wherein Ketonia obtained from the 5th process is preheated in a heater at 50-80°C, and degassed in a degasser.

The heating and degassing process is commonly practiced in the art, wherein the preheating process is to preheat Ketonia from the 5th process so as to optimize the following homogenization process, and the degassing process is to remove air from Ketonia obtained from the above preheating process so as to prevent oxidation thereof.

### 7. Homogenization process (7th process)

This process is to homogenize Ketonia, wherein Ketonia sequentially passed through the preheating and degassing process of the 6th process is homogenized in a homogenizer.

It is preferred that the homogenizer used in this process is operated under 190-500bars.

The reason for using 190-500bars of the homogenizer pressure is to homogenize the Ketonia particles.

When the homogenizer pressure used herein is less than 190bars or more than 500bars, the Ketonia particles are not homogenized properly, which would lower texture and feeling when Ketonia goes down the throat.

### 8. Sterilization and cooling process (8th process)

This process is to sterilize and cool homogenized Ketonia, wherein the homogenized Ketonia from the 7th process is sterilized in a sterilizer, and cooled in a cooler.

The sterilizer and the cooler used herein are those commonly used in the art, and the detailed description of such devices is omitted in the present specification, since those are apparent to the ordinarily skilled person with common knowledge in the art.

Further, the sterilization method using a sterilizer in the above process is those commonly practiced in the art, without being restricted to certain methods.

Preferably, HTST (high-temperature short-time) or UHT (ultra-high temperature) sterilization method is used.

Sterilized Ketonia is cooled to 20-30°C in a cooler.

### Mode for Invention

The present invention is further illustrated through the following example. It will be obvious for the ordinarily skilled person in the art that this example is only to exemplify the present invention, by no means limiting the scope of the right to be protected. Any simple modifications or variations of the present invention may be easily practiced by the ordinarily skilled person in the art, and are considered to be included in the scope of the present invention.

### Example: Composition for the ketogenic diet prepared according to the present invention

In the first mixing tank, 1660.41kg of purified water at 60°C which was obtained by sequentially passing water (drinkable water) through a sand filter, a cation exchange resin, a microfilter and a reverse osmosis filter, 31.91kg of sodium caseinate, 21.05kg of milk fat globule protein, 2.29kg of alpha lactalbumin and 6.58kg of fructo-oligosaccharides were mixed together so as to prepare a raw material solution. Into the resulted raw material solution, 4kg of guar gum was mixed.

In the second mixing tank, 6kg of glycerin ester of fatty acid and 11.79kg of modified starch were mixed into 204kg of olive oil at 60°C and 30kg of soybean oil at 60°C, and then stirred for 30 minutes for emulsification, resulting in emulsified oil.

In the third mixing tank, the raw material solution mixed with guar gum prepared in the first mixing tank and the emulsified oil prepared in the second mixing tank were mixed together to obtain a raw material mixture.

The resulted raw material mixture was cooled to 7°C, and thereto added were 4.8kg of tricalcium phosphate, 2kg of monocalcium phosphate, 1.4kg of calcium carbonate, 3.6kg of potassium citrate, 2.2kg of potassium chloride, 1.3kg of sodium bicarbonate, 0.46kg of magnesium hydroxide, 0.01kg of manganese sulfate, 0.26kg of ferrous lactate, 0.01kg of cupric sulfate, 0.16kg of zinc sulfate, 0.01kg of potassium iodide, 0.3kg of choline chloride, 0.93kg of purified salt, 0.024kg of vitamin A, 0.019kg of vitamin D3, 0.035kg of vitamin E, 0.010kg of vitamin K1, 0.010kg of vitamin B1, 0.006kg of vitamin B2, 0.010kg of vitamin B6, 0.010kg of vitamin B12, 0.518kg of vitamin C, 0.043kg of niacin (vitamin B3), 0.013kg of pantothenic acid (vitamin B5), 0.010kg of biotin (vitamin B7), 0.010kg of folic acid (vitamin B9), 0.120kg of inositol (vitamin B8), 0.550kg of taurine, 0.101kg of L-carnitine (vitamin Bt), 0.03kg of sucralose and 3kg of an aromatic (banana flavor), resulting in Ketonia.

The prepared Ketonia was preheated in a heater at 60°C, degassed in a degasser, homogenized in a homogenizer under 200bars, sterilized by HTST method, and cooled to 25°C in a cooler. The ketogenic ratio of the resulted composition was 4:1.

### Test 1: Reduction in the frequency of seizure

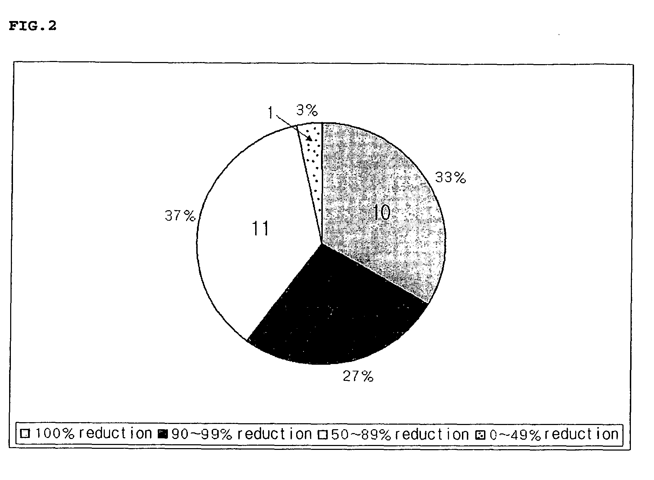

30 epilepsy patients were consistently fed with the composition for the ketogenic diet prepared according to the present invention for 3 months. Then, the reduction in seizure frequency was estimated in 4 ranges classified as: 100% reduction, 90-99% reduction, 50-89% reduction and 0-49% reduction. The results were shown in the following Table 1 and Fig.2.

**Table 1**

| | 100% reduction | 90-99% reduction | 50-89% reduction | 0-49% reduction |
|---|---|---|---|---|
| Example (number of patients) | 10 | 8 | 11 | 1 |
| Example (%) | 33% | 27% | 37% | 3% |

As seen from Table 1 and Fig.2, complete seizure control was achieved in 10 out of 30 epilepsy patients, and 90% or more of reduction in seizure were shown in 8 patients although the seizure was not completely controlled.

In other words, complete seizure control or significant reduction in seizure was achieved in 18 (60%) out of 30 (100%) epilepsy patients.

### Test 2: Sensory test

A sensory test of the composition for the ketogenic diet prepared by the present invention regarding taste, flavor, texture and satisfaction was carried out, in 30 epilepsy patients. The sensory test was based on a 5-point rating system, wherein 1 = very bad; 2 = bad; 3 = ordinary; 4 = good; and 5 = very good. The results are shown in the following Table 2.

**Table 2**

| | taste | flavor | texture | satisfaction |
|---|---|---|---|---|
| Example | 5 | 4 | 4 | 5 |

As seen from Table 2, it marked high points in all the rated organoleptic attributes.

The reason for the high marks in all the organoleptic attributes is because it can be smoothly taken without rejection owing to the sweetener and aromatics included therein.

### Industrial Applicability

The composition for the ketogenic diet according to the preparation method of the present invention can be easily taken by patients since it does not cause rejections such as vomit or diarrhea which may occur with the start of the ketogenic diet, and eliminate the inconvenience of taking additional food for obtaining other functional elements required for the human body owing to functional substances included therein. Moreover, the homogenous liquid form of the present composition allows it to easily slide down the throat and provides good texture in the mouth, thereby it helps a patient to easily take the same.

## Claims

1. A method for preparing a composition for the ketogenic diet comprising the following processes of:
a dissolving process wherein protein and carbohydrate materials and purified water are mixed and dissolved together in a first mixing tank(1st process);
a complex stabilizer mixing process wherein the raw material solution obtained from the 1st process is mixed with a complex stabilizer at the mixing ratio of 1:0.002-0.004 by weight of the raw material to the complex stabilizer(2nd process);
an emulsifying process wherein vegetable oil is mixed with an emulsifier and stirred for 20-40 minutes in a second mixing tank for emulsification(3rd process);
a mixing process wherein the raw material solution mixed with the complex stabilizer from the 2nd process is mixed with emulsified oil from the 3rd process(4th process);
a cooling and addition process wherein the raw material mixture obtained from the 4th process is cooled to 5-10°C and then functional materials are added thereto(5th process);
a preheating and degassing process wherein Ketonia obtained from the 5th process is preheated in a heater at 50-80°C and degassed in a degasser(6th process);
a homogenization process wherein Ketonia preheated and degassed in the 6th process is homogenized in a homogenizer(7th process); and
a sterilization and cooling process wherein Ketonia homogenized in the 7th process is sterilized in a sterilizer and cooled in a cooler(8th process).

2. The method for preparing a composition for the ketogenic diet according to claim 1, wherein 95.4-97.2wt% of purified water, 1.47-2.52wt% of sodium caseinate, 0.98-1.42wt% of milk fat globule membrane protein, 0.07-0.18wt% of alpha lactalbumin, 0.28-0.48wt% of fructo-oligosaccharides are mixed in the first mixing tank in the 1st process.

3. The method for preparing a composition for the ketogenic diet according to claim 1, wherein the vegetable oil is mixed with the emulsifier at the mixing ratio of 1:0.06-0.1 by weight of the vegetable oil to the emulsifier in the second mixing tank in the 3rd process.

4. The method for preparing a composition for the ketogenic diet according to claim 1, wherein the raw material solution mixed with the complex stabilizer from the 2nd process is mixed with the emulsified oil from the 3rd process at the ratio of 1:0.1-0.2 by weight of the solution to the emulsified oil in the third mixing tank in the 4th process.

5. The method for preparing a composition for the ketogenic diet according to claim 1, wherein the functional materials are added to the cooled raw material mixture at the ratio of 1:0.01-0.3 by weight of the raw material mixture to the functional materials in the 5th process.

6. The method for preparing a composition for the ketogenic diet according to claim 1, wherein the functional materials of the 5th process comprises a mixture of 74.85-84.55wt% of minerals, 5.89-8.17wt% of vitamins, 0.02-0.2wt% of a sweetener, 9.54-16.78wt% of aromatics.

7. The method for preparing a composition for the ketogenic diet according to claim 1, wherein the homogenizer used in the 7th process is operated under the pressure of 190-500 bars.

8. A composition for the ketogenic diet prepared by any of the methods according to claims 1 to 7, provided in a liquid form, which has the ketogenic ratio of 3-5:1.

9. The composition for the ketogenic diet according to claim 8, wherein the ketogenic ratio is 4:1.
